(19) Europäisches Patentamt
European Patent Office
Office européen des brevets

(11) **EP 2 377 906 A1**

(12) **EUROPEAN PATENT APPLICATION**
published in accordance with Art. 153(4) EPC

(43) Date of publication:
**19.10.2011 Bulletin 2011/42**

(21) Application number: **09831848.8**

(22) Date of filing: **03.12.2009**

(51) Int Cl.:
*C09J 133/06* $^{(2006.01)}$  *C09J 7/02* $^{(2006.01)}$
*C09J 11/06* $^{(2006.01)}$  *C09J 175/04* $^{(2006.01)}$
*C09J 201/00* $^{(2006.01)}$  *C09J 201/06* $^{(2006.01)}$

(86) International application number:
**PCT/JP2009/070314**

(87) International publication number:
**WO 2010/067744 (17.06.2010 Gazette 2010/24)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.12.2008 JP 2008315010**

(71) Applicant: **LINTEC Corporation**
**Tokyo 173-0001 (JP)**

(72) Inventors:
• **ARAI, Takayuki**
**Tokyo 173-0001 (JP)**
• **MATANO, Tadashi**
**Tokyo 173-0001 (JP)**
• **RUSLIM, Christian**
**Tokyo 113-0033 (JP)**

(74) Representative: **Benson, John Everett**
**J. A. Kemp & Co.**
**14 South Square**
**Gray's Inn**
**London WC1R 5JJ (GB)**

(54) **ADHESIVE COMPOSITION AND ADHESIVE SHEET**

(57)     A pressure-sensitive adhesive composition including: a (meth)acrylate copolymer (A) obtained by copolymerizing a (meth)acrylate and a reactive group-containing monomer, such that a ratio of the reactive group-containing monomer (constituent unit derived from the monomer) in the copolymer ranges from 0.01 to 15 wt%; a polyrotaxane (B) having at least two cyclic molecules and a linear-chain molecule passing through opening portions of the cyclic molecules wherein the cyclic molecules have each one or more reactive groups and the linear-chain molecule has blocking groups at both ends thereof; and a crosslinking agent (C) having a reactive group capable of reacting with the reactive group of the (meth)acrylate copolymer (A) and with the reactive group of the polyrotaxane (B), wherein an equivalent ratio of the reactive group of the crosslinking agent (C) with respect to the reactive group of the (meth)acrylate copolymer (A) ranges from 0.001 to 2, and an equivalent ratio of the reactive group of the crosslinking agent (C) with respect to the reactive group of the polyrotaxane (B) ranges from 0.1 to 5. When used in an optical member such as a polarizing plate or a retardation plate, such a pressure-sensitive adhesive composition allows forming a pressure-sensitive adhesive layer excellent in light leakage prevention ability, while satisfying sufficient durability and optical characteristics, such as total light transmittance.

Figure 1

EP 2 377 906 A1

**Description**

TECHNICAL FIELD

The present invention relates to a pressure-sensitive adhesive sheet having a pressure-sensitive adhesive layer that is excellent in stress relaxation properties and is suitable for use in optical applications, and to a pressure-sensitive adhesive composition that forms the pressure-sensitive adhesive layer.

BACKGROUND ART

Ordinarily, pressure-sensitive adhesive layers formed from pressure-sensitive adhesive compositions are widely used for bonding of polarizing plates and retardation plates to glass substrates or the like in liquid crystal panels. However, optical members such as polarizing plates and retardation plates shrink readily, for instance when heated, and hence such an optical member contracts depending on the thermal history thereof. As a result, the pressure-sensitive adhesive layer that is overlaid on the optical member comes off the interface (so-called lifting, peeling), in that the pressure-sensitive adhesive layer fails to conform to that contraction. The deviation of the optical axis of the optical member that arises from the stress generated upon contraction of the optical member gives rise to light leakage (so-called blank spots), which is problematic.

Methods for preventing the above occurrence include, for instance (1) methods in which a pressure-sensitive adhesive layer having high adhesive strength and excellent form stability is affixed to an optical member such as a polarizing plate, to suppress thereby contraction of the optical member itself, or (2) methods that utilize a pressure-sensitive adhesive layer having little stress upon contraction of the optical member. In (1) methods, it is effective to use pressure-sensitive adhesive layers having high storage modulus, as disclosed in Patent document 1. In (2) methods, it is effective to use pressure-sensitive adhesive layers having excellent stress relaxation properties that allow flexibly responding to deformation. Upon formation of such conventional pressure-sensitive adhesive layers having excellent stress relaxation properties, however, it was necessary to extremely reduce to the crosslinking density in the pressure-sensitive adhesive layers. This resulted in lower strength of the pressure-sensitive adhesive layer itself, and in impaired durability, all of which was problematic.

In Patent documents 2 to 4, accordingly, instead of extremely reducing the crosslinking density in a pressure-sensitive adhesive layer, a plasticizer, liquid paraffin, a urethane elastomer or the like is added to an acrylic adhesive, to appropriately soften the obtained pressure-sensitive adhesive composition and thereby impart stress relaxation properties to the pressure-sensitive adhesive layer. It is eventually aimed to obtain light leakage prevention ability and durability.

However, pressure-sensitive adhesive layers formed from a pressure-sensitive adhesive composition having a plasticizer or liquid paraffin added thereto undergo bleed-out of the plasticizer or of the liquid paraffin over time. This gave rise to problems such as, for instance, contamination of liquid crystal cells. In pressure-sensitive adhesive compositions having a urethane elastomer added thereto, the addition amount of the urethane elastomer is limited, in terms of compatibility with other components. This resulted in problems such as insufficient improvement of stress relaxation properties, and clouding, depending on the compatibility between acrylic adhesives and the urethane elastomer. In conventional technologies, therefore, it was difficult to improve radically the light leakage prevention ability and durability of pressure-sensitive adhesive layers formed from pressure-sensitive adhesive compositions for optical members.

Patent document 5 proposes a pressure-sensitive adhesive composition in which a polyrotaxane and, optionally, an isocyanate compound, are blended into an adhesive.

Patent document 1: Japanese Patent Application Laid-open No. 2006-235568
Patent document 2: Japanese Patent Application Laid-open No. 5-45517
Patent document 3: Japanese Patent Application Laid-open No. 9-137143
Patent document 4: Japanese Patent Application Laid-open No. 2005-194366
Patent document 5: Japanese Patent Application Laid-open No. 2007-224133

DISCLOSURE OF THE INVENTION

PROBLEM TO BE SOLVED BY THE INVENTION

Pressure-sensitive adhesive layers formed from the above pressure-sensitive adhesive composition had excellent stress relaxation properties thanks to the polyrotaxane, but insufficient durability and optical characteristics, namely total light transmittance, when used in optical members.

MEANS FOR SOLVING THE PROBLEM

In view of the above, it is an object of the present invention to provide a pressure-sensitive adhesive sheet having a pressure-sensitive adhesive layer excellent in light leakage prevention ability while satisfying sufficient durability and optical characteristics, such as total light transmittance, when used in an optical member such as a polarizing plate or a retardation plate, and to provide a pressure-sensitive adhesive composition that forms the pressure-sensitive adhesive layer.

In order to attain the above goal, the present invention is firstly a pressure-sensitive adhesive composition that comprises a (meth)acrylate copolymer (A) obtained by copolymerizing a (meth)acrylate and a reactive group-containing monomer, such that a ratio of the reactive group-containing monomer (constituent unit derived from the monomer) in the copolymer ranges from 0.01 to 15 wt%; a polyrotaxane (B) having at least two cyclic molecules and a linear-chain molecule passing through opening portions of the cyclic molecules wherein the cyclic molecules have each one or more reactive groups and the linear-chain molecule has blocking groups at both ends thereof; and a crosslinking agent (C) having a reactive group capable of reacting with the reactive group of the (meth)acrylate copolymer (A) and with the reactive group of the polyrotaxane (B), wherein an equivalent ratio of the reactive group of the crosslinking agent (C) with respect to the reactive group of the (meth)acrylate copolymer (A) ranges from 0.001 to 2, and an equivalent ratio of the reactive group of the crosslinking agent (C) with respect to the reactive group of the polyrotaxane (B) ranges from 0.1 to 5 (Invention 1).

A pressure-sensitive adhesive layer formed from a pressure-sensitive adhesive composition according to the above invention (Invention 1) has excellent stress relaxation properties thanks to the interlocked structure derived from the polyrotaxane, and has also appropriate crosslinking density. As a result, the pressure-sensitive adhesive layer exhibits sufficient strength and excellent optical characteristics such as total light transmittance. Therefore, the pressure-sensitive adhesive layer can be appropriately used in optical members such as polarizing plates and retardation plates, in which case not only optical characteristics but also durability and light leakage prevention ability are likewise excellent.

In the above invention (Invention 1), preferably, a gel fraction after crosslinking of the pressure-sensitive adhesive composition ranges from 20 to 90% (Invention 2).

In the above inventions (Inventions 1, 2), preferably, the reactive group of the (meth)acrylate copolymer (A) is a hydroxyl group, the reactive group of the polyrotaxane (B) is a hydroxyl group and the reactive group of the crosslinking agent (C) is an isocyanate group (Invention 3).

Secondly, the present invention provides a pressure-sensitive adhesive sheet (Invention 4) that has a base material and a pressure-sensitive adhesive layer formed using the above pressure-sensitive adhesive composition (Inventions 1 to 3).

In the above invention (Invention 4), the base material may comprise a release sheet (Invention 5), may comprise an optical member (Invention 6), or may comprise a polarizing plate or a retardation plate (Invention 7).

The polarizing plate of the present invention includes conceptually polarizing films, and the retardation plate includes conceptually retardation films.

ADVANTAGEOUS EFFECT OF THE INVENTION

The present invention succeeds in providing a pressure-sensitive adhesive sheet having a pressure-sensitive adhesive layer excellent in durability and optical characteristics, such as total light transmittance, and excellent also in light leakage prevention ability, when used in an optical member such as a polarizing plate or a retardation plate, and succeeds in providing a pressure-sensitive adhesive composition that forms the pressure-sensitive adhesive layer.

BRIEF DESCRIPTION OF THE DRAWINGS

Fig. 1 is a conceptual diagram illustrating a pressure-sensitive adhesive composition according to an embodiment of the present invention; and
Fig. 2 is a diagram illustrating measurement regions in a test of light leakage properties of an optical laminate.

MODE FOR CARRYING OUT THE INVENTION

Embodiments of the present invention are explained below.

[Pressure-sensitive adhesive composition]

A pressure-sensitive adhesive composition according to an embodiment of the present invention comprises:

A. a (meth)acrylate copolymer (A) obtained by copolymerizing a (meth)acrylate and a reactive group-containing monomer, such that a ratio of the reactive group-containing monomer (constituent unit derived from the monomer) in the copolymer ranges from 0.01 to 15 wt%;

B. a polyrotaxane (B) having at least two cyclic molecules and a linear-chain molecule passing through opening portions of the cyclic molecules wherein the cyclic molecules have each one or more reactive groups and the linear-chain molecule has blocking groups at both ends thereof; and

C. a crosslinking agent (C) having a reactive group capable of reacting with the reactive group of the (meth)acrylate copolymer (A) and with the reactive group of the polyrotaxane (B).

Herein, $R_1$ denotes the reactive group of the (meth)acrylate copolymer (A), $R_2$ denotes the reactive group of the polyrotaxane (B), and $R_3$ denotes the reactive group of the crosslinking agent (C).

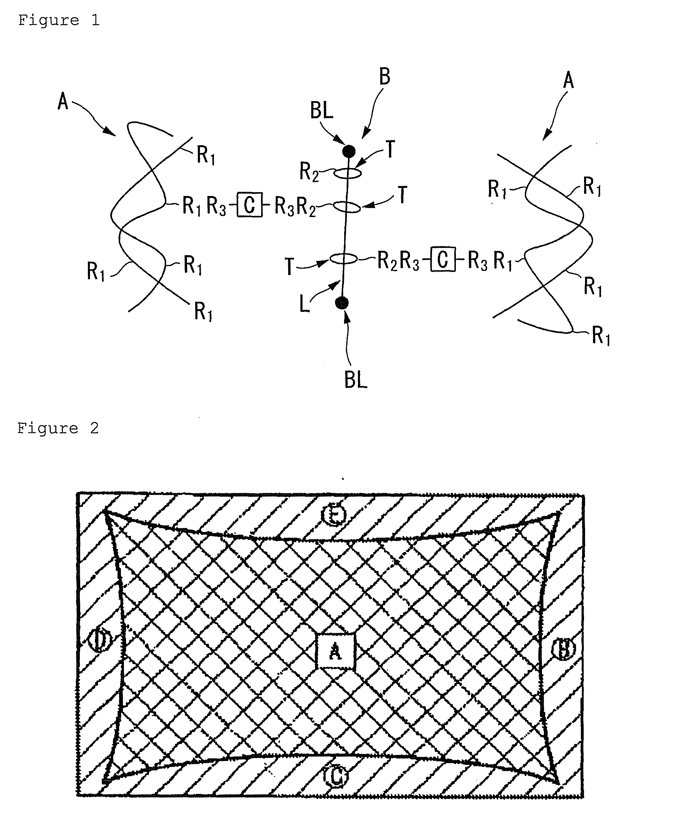

As illustrated in Fig. 1, the pressure-sensitive adhesive composition can be obtained by blending a (meth)acrylate copolymer (A) having the reactive groups $R_1$, a polyrotaxane (B) having a linear-chain molecule L passing through opening portions of at least two cyclic molecules T that have each the reactive groups $R_2$, and having blocking groups BL at both ends of the linear-chain molecule L, and a crosslinking agent (C) having the functional groups $R_3$ capable of reacting with the reactive groups $R_1$ and the reactive groups $R_2$.

A pressure-sensitive adhesive layer resulting from indirectly bonding the cyclic molecules of the polyrotaxane (B) with the (meth)acrylate copolymer (A), by way of the crosslinking agent (C), can be obtained by using such a pressure-sensitive adhesive composition. In the pressure-sensitive adhesive layer, cyclic molecules T can move freely along a linear-chain molecule L of the polyrotaxane (B). The pressure-sensitive adhesive layer is imparted thereby with substantial stress relaxation properties.

The ratio of the reactive group-containing monomer (constituent unit derived from the monomer) having the reactive groups $R_1$ in the (meth)acrylate copolymer (A) ranges from 0.01 to 15 wt%, preferably from 0.1 to 10 wt%, and in particular from 0.5 to 5 wt%. If the ratio of the reactive group-containing monomer is smaller than 0.01 wt%, there is generated an excess of (meth)acrylate copolymer (A) into which the reactive group-containing monomer is not completely introduced at the micro level, as a result of which the effect of the present invention may fail to be elicited. A ratio of reactive group-containing monomer in excess of 15 wt% may result in direct bonding between the (meth)acrylate copolymers (A), without intervening polyrotaxane (B), and may give rise to a dense crosslinking portion, as a result of which sufficient mobility, which is elicited by the intervening polyrotaxane (B), may fail to be achieved.

The equivalent ratio of reactive groups $R_3$ of the crosslinking agent (C) with respect to the reactive groups $R_1$ of the (meth)acrylate copolymer (A) ranges from 0.001 to 2, preferably from 0.005 to 1, in particular from 0.1 to 0.5. When the above equivalent ratio is smaller than 0.001, there is present a substantial amount of uncrosslinked (meth)acrylate copolymer (A), even upon crosslinking by heating or the like. As a result, the formed pressure-sensitive adhesive layer is prone to foaming in heat-applied environments, and may exhibit impaired durability. When on the other hand the equivalent ratio is greater than 2, multiple reactive groups $R_1$ in one molecule of the (meth)acrylate copolymer (A) respectively become crosslinked from multiple directions, as a result of which the mobility of the (meth)acrylate copolymer (A) becomes restricted. This may give rise to poorer stress relaxation properties and poorer light leakage prevention ability and/or durability in the formed pressure-sensitive adhesive layer.

The equivalent ratio of the reactive groups $R_3$ of the crosslinking agent (C) with respect to the reactive groups $R_2$ of the polyrotaxane (B) ranges from 0.1 to 5, preferably from 0.5 to 2. When the above equivalent ratio is smaller than 0.1, there is present a substantial amount of uncrosslinked polyrotaxane (B), even upon crosslinking by heating or the like. As a result, uncrosslinked polyrotaxane (B) may break free in a heat-applied environment, as a result of which the pressure-sensitive adhesive layer may exhibit cloudiness, become prone to foaming, or have poorer durability. When on the other hand the above equivalent ratio is greater than 5, individual (meth)acrylate copolymers (A) become bonded to respective multiple reactive groups $R_2$ of one cyclic molecule T of the polyrotaxane (B). As a result, polyrotaxane (B) as a whole cannot function as a crosslinking point; instead, the cyclic molecules T themselves end up becoming crosslinking points, and hence the mobility of the crosslinking point is lost. This gives rise to poorer stress relaxation properties, and poorer light leakage prevention ability and/or durability in the formed pressure-sensitive adhesive layer.

The equivalent ratio of reactive groups $R_3$ of the crosslinking agent (C) with respect to the total amount of reactive groups $R_2$ of the polyrotaxane (B) and the reactive groups $R_1$ of the (meth)acrylate copolymer (A) ranges ordinarily from 0.001 to 2, preferably from 0.05 to 1, and in particular from 0.1 to 0.5.

The gel fraction after crosslinking of the pressure-sensitive adhesive composition (gel fraction of a pressure-sensitive adhesive layer formed from the pressure-sensitive adhesive composition) ranges preferably from 20 to 90%, in particular from 40 to 79%, and more preferably from 60 to 75%. When the gel fraction is smaller than 20%, cross-linking between the (meth)acrylate copolymer (A) and the polyrotaxane (B) is insufficient, and foaming becomes likelier under a heat-applied environment. Durability may be impaired as a result. On the other hand, a gel fraction in excess of 90% restricts the mobility of the crosslinking points based on the polyrotaxane (B). This may result in loss of stress relaxation properties and poorer light leakage prevention ability.

In a pressure-sensitive adhesive composition that satisfies the above conditions, it becomes possible to prevent loss of optical characteristics on account of excessive addition of polyrotaxane (B), to secure the degree of freedom with which the cyclic molecules T of the polyrotaxane (B) move along the linear-chain molecule L that passes through the cyclic molecules T, and to preserve an appropriate crosslinking density through crosslinking of the polyrotaxane (B) and the (meth)acrylate copolymer (A). As a result, the obtained pressure-sensitive adhesive layer delivers excellent optical characteristics, such as total light transmittance, as well as sufficient strength and excellent stress relaxation properties. Durability and light leakage prevention ability are likewise excellent as a result.

A. (meth)acrylate copolymer

Examples of the (meth)acrylate that is a constituent unit of the (meth)acrylate copolymer (A) include, for instance, alkyl (meth)acrylates containing an alkyl group having from 1 to 18 carbon atoms; a (meth)acrylate having a functional group in the form of an alicyclic compound such as, a cycloalkyl (meth)acrylate; or a (meth)acrylate having a functional group in the form of an aromatic compound such as benzyl (meth)acrylate. Particularly preferred among the foregoing is an alkyl (meth)acrylate containing an alkyl group having from 1 to 18 carbon atoms, for instance, methyl (meth)acrylate, ethyl (meth)acrylate, propyl (meth)acrylate, butyl (meth)acrylate, 2-ethylhexyl (meth)acrylate or the like. The foregoing may be used singly or in combinations of two or more.

The reactive group-containing monomer that is a constituent unit of the (meth)acrylate copolymer (A) is a monomer that has, in the molecule, a polymerizable double bond and the reactive groups $R_1$, for instance a hydroxyl group, a carboxyl group, an amino group or the like. The (meth)acrylate copolymer (A) may comprise two or more types of the reactive group $R_1$. Hydroxyl groups are particularly preferred among the reactive groups $R_1$, since in that case the pressure-sensitive adhesive composition is skewed neither towards acidity nor basicity, and is not prone to exhibit coloring or the like, and there is achieved high cross-linking stability in the pressure-sensitive adhesive layer formed from the pressure-sensitive adhesive composition. Therefore, a hydroxyl group-containing unsaturated compound in which the reactive groups $R_1$ are hydroxyl groups is preferably used as the reactive group-containing monomer.

Preferred examples of hydroxyl group-containing unsaturated compounds include, for instance, hydroxyl group-containing acrylates such as 2-hydroxyethyl (meth)acrylate, 2-hydroxypropyl (meth)acrylate or the like. The foregoing may be used singly or in combinations of two or more.

The (meth)acrylate copolymer (A) is obtained through copolymerization of a reactive group-containing monomer and a (meth)acrylate such as those described above, in accordance with ordinary methods. Besides the monomers, vinyl formate, vinyl acetate, styrene or the like may also be copolymerized in small proportions (for instance, not more than 10 wt%, preferably not more than 5 wt%).

The weight-average molecular weight of the (meth)acrylate copolymer (A) ranges preferably from 100,000 to 3,000,000, in particular from 500,000 to 2,000,000, expressed as a GPC (Gel Permeation Chromatography) equivalent value. If the weight-average molecular weight is smaller than 100,000, the pressure-sensitive adhesive layer may fail to exhibit sufficient stress relaxation properties and durability. On the other hand, a weight-average molecular weight beyond 3,000,000 results in poor compatibility with the polyrotaxane (B), and poorer optical characteristics, for instance total light transmittance, in the pressure-sensitive adhesive layer, and may preclude securing sufficient stress relaxation properties in the pressure-sensitive adhesive layer.

The glass transition temperature (Tg) of the (meth)acrylate copolymer (A) is preferably not higher than 50˚C, in particular not higher than 30˚C. A glass transition temperature (Tg) higher than 50˚C results in poorer compatibility with the polyrotaxane (B), and may preclude the pressure-sensitive adhesive layer from exhibiting sufficient stress relaxation properties.

The blending amount of the (meth)acrylate copolymer (A) in the present pressure-sensitive adhesive composition is appropriately adjusted in such a manner that the equivalent ratio of the reactive groups $R_1$ of the (meth)acrylate copolymer (A) and the reactive groups $R_3$ of the crosslinking agent (C), and, preferably, the gel fraction of the pressure-sensitive adhesive layer formed from the pressure-sensitive adhesive composition, lie within the above-described ranges. Ordinarily, the blending amount ranges from 70 to 99.5 wt%, preferably from 75 to 99 wt%, with respect to solids of the pressure-sensitive adhesive composition.

B. Polyrotaxane

The above polyrotaxane (B) can be obtained in accordance with known methods (for instance, the method disclosed in JP 2005-154675 A).

The linear-chain molecule L of the polyrotaxane (B) is not particularly limited, provided that it is a molecule or substance that forms an inclusion complex in the cyclic molecules T, that can yield an integrated body through mechanical bonds, not chemical bonds such as covalent bonds or the like, and that is a linear chain. In the description of the present invention, "linear-chain" in "linear-chain molecule" means a chain that is substantially "linear". That is, the linear-chain molecule L may have a branched chain, provided that the cyclic molecules T can move along the linear-chain molecule L.

Preferred examples of the linear-chain molecule L of the polyrotaxane (B) include, for instance, polyethylene glycol, polypropylene glycol, polyisoprene, polyisobutylene, polybutadiene, polytetrahydrofuran, polyacrylates, polydimethylsiloxane, polyethylene, polypropylene or the like. Two or more types of these linear-chain molecules L may be comprised in the pressure-sensitive adhesive composition.

The number-average molecular weight of the linear-chain molecule L of the polyrotaxane (B) is preferably 3,000 to 300,000, in particular 10,000 to 200,000, and more preferably 20,000 to 100,000. When the number-average molecular weight is smaller than 3,000, the range of motion of the cyclic molecules T along the linear-chain molecule L is short, which may preclude obtaining sufficient stress relaxation properties in the pressure-sensitive adhesive layer. A number-average molecular weight in excess of 300,000 may impair the solubility of the polyrotaxane (B) in solvents, or the compatibility of the polyrotaxane (B) with the (meth)acrylate copolymer (A).

The cyclic molecules T in the polyrotaxane (B) are not particularly limited, provided that they can form an inclusion complex with the linear-chain molecule L, and can move along the linear-chain molecule L. In the present description, "cyclic" in "cyclic molecule" means substantially "cyclic". That is, provided that the cyclic molecules T can move along the linear-chain molecule L, the cyclic molecules T need not be a completely closed ring, and may have, for instance, a spiral structure.

Preferred examples of the cyclic molecules T of the polyrotaxane (B) include, for instance, cyclic polymers such as a cyclic polyether, a cyclic polyester, a cyclic polyether amine, a cyclic polyamine or the like, or cyclodextrins such as $\alpha$-cyclodextrin, $\beta$-cyclodextrin, $\gamma$-cyclodextrin or the like. Specific examples of cyclic polymers include, for instance, crown ethers or derivatives thereof, calixarenes or derivatives thereof, cyclophanes or derivatives thereof, and cryptands or derivatives thereof.

Preferred examples of the cyclic molecules T from among the foregoing are cyclodextrins such as $\alpha$-cyclodextrin, $\beta$-cyclodextrin, $\gamma$-cyclodextrin and the like, and more preferably $\alpha$-cyclodextrin, since cyclodextrins are comparatively easy to procure, and allow selecting multiple types of blocking groups BL. Two or more types of the cyclic molecules T may be comprised in the polyrotaxane (B) or the pressure-sensitive adhesive composition.

When using cyclodextrins as the cyclic molecules T, substituents capable of enhancing the solubility of the polyrotaxane (B) may be introduced into the cyclodextrins. Preferred examples of such substituents include, for instance, acetyl groups, alkyl groups, trityl groups, tosyl groups, trimethylsilane groups and phenyl groups, as well as polyester chains, oxyethylene chains, alkyl chains, acrylate chains or the like. The number-average molecular weight of such a substituent is preferably 100 to 10,000, in particular 400 to 2,000.

The introduction ratio (degree of substitution) of the above substituents in the hydroxyl groups of the cyclodextrin is preferably 10 to 90%, in particular 30 to 70%. An introduction ratio smaller than 10% may preclude enhancing sufficiently the solubility of the polyrotaxane (B), while an introduction ratio beyond 90% results in a lower content of reactive groups $R_2$ in the polyrotaxane (B), which may preclude the polyrotaxane (B) from reacting sufficiently with the above copolymer (A) or the crosslinking agent (C). Even in a case where the substituent has reactive groups, as described below, an introduction ratio in excess of 90% may make control of the introduction amount difficult, on account of steric hindrance relationships.

Preferably, the reactive groups $R_2$ of the cyclic molecules T of the polyrotaxane (B) are, for instance, hydroxyl groups, carboxyl groups, amino groups or the like. Hydroxyl groups are particularly preferred, since in that case the pressure-sensitive adhesive composition is skewed neither towards acidity nor basicity, and is not prone to exhibit coloring or the like due to reactions, and there is achieved excellent bond stability. The polyrotaxane (B) may comprise two or more types of the reactive groups $R_2$. The reactive groups $R_2$ need not be directly bonded to the cyclic molecules T. That is, the above reactive groups $R_2$ may be present by way of the above substituents. Also, two or more dissimilar types of substituent may be bonded by way of the reactive groups $R_2$, such that any substituent from among the foregoing may have the reactive groups $R_2$. By virtue of such features, it is possible for highly bulky substituents having reactive groups $R_2$ to be introduced after steric hindrance with the cyclic molecules T is avoided by regulating the distance from the cyclic molecules T. It is also possible to form substituents of an alkyl chain, an ether chain, an ester chain, or an oligomer chain of the foregoing and introduce a substituent having one or more reactive groups $R_2$ to the above substituents by a polymerization stating from reactive groups after steric hindrance with the cyclic molecules T is avoided.

In a specific explanation of the above, for instance the hydroxyl groups present in the cyclodextrin itself are the reactive groups $R_2$. In a case where hydroxypropyl groups are added to the hydroxyl groups, moreover, the hydroxyl groups in the hydroxypropyl groups are included among the reactive groups $R_2$. In a case where ring-opening polymerization of $\varepsilon$-caprolactone is performed by way of the hydroxyl groups of the hydroxypropyl groups, then hydroxyl groups are formed at the opposite side end of the polyester chain obtained by the above ring-opening polymerization. In this case, such hydroxyl groups as well are also included among the reactive groups $R_2$.

In terms of achieving both reactivity and compatibility with the polyrotaxane (B), the substituent used is preferably an alkyl chain, an ether chain, an ester chain or an oligomer chain of the foregoing, and substituents having one or more reactive groups in the substituent are introduced into the cyclic molecules T. The introduction ratio of the substituent is as the introduction ratio of the above substituents.

The introduction ratio of the above reactive groups $R_2$ in the cyclic molecules T ranges preferably from 4 to 90%, in particular from 20 to 70%. When the introduction ratio is smaller than 4%, the polyrotaxane (B) may fail to react sufficiently with the above copolymer (A) or crosslinking agent (C). On the other hand, an introduction ratio beyond 90% results in multiple crosslinks in one same cyclic molecule T, as a result of which the cyclic molecules T themselves end up becoming crosslinking points. The polyrotaxane (B) as a whole cannot then function as a crosslinking point, so that, as a result, sufficient stress relaxation properties may fail to be secured in the pressure-sensitive adhesive layer.

The blocking groups BL of the polyrotaxane (B) are not particularly limited provided that they are groups that can keep the cyclic molecules T skewered by the linear-chain molecule L. Examples of such groups include, for instance, bulky groups, ionic groups or the like.

Specific examples of the blocking groups BL of the polyrotaxane (B) include, for instance, dinitrophenyl groups, cyclodextrins, adamantane groups, trityl groups, fluoresceins, pyrenes, anthracenes or the like, or a main chain, side chain or the like of a polymer having a number-average molecular weight of 1,000 to 1,000,000. The polyrotaxane (B) or the pressure-sensitive adhesive composition may comprise two or more types of such blocking groups BL.

Examples of the above polymers having a number-average molecular weight of 1,000 to 1,000,000 include, for instance, polyamides, polyimides, polyurethanes, polydimethylsiloxanes, polyacrylates or the like.

The blending amount of polyrotaxane (B) in the present pressure-sensitive adhesive composition is appropriately adjusted in such a manner that the equivalent ratio of the reactive groups $R_3$ of the crosslinking agent (C) with respect to the reactive groups $R_2$ of the polyrotaxane (B), and, preferably, the gel fraction of the pressure-sensitive adhesive layer formed from the pressure-sensitive adhesive composition, lie within the above-described ranges. Ordinarily, the blending amount ranges from 0.05 to 30 wt%, preferably from 0.3 to 20 wt%, with respect to solids of the pressure-sensitive adhesive composition.

The amount of cyclic molecules T that form an inclusion complex with the linear-chain molecule L in a state where the cyclic molecules T are skewered by the linear-chain molecule L ranges preferably from 0.1 to 60%, in particular, 1 to 50%, and yet more preferably from 5 to 40%, taking as 100% the absolute maximum of the amount of cyclic molecules T that form an inclusion complex with the linear-chain molecule L in a state where the cyclic molecules T are skewered by the linear-chain molecule L.

The maximum inclusion amount of cyclic molecules T is determined on the basis of the length of the linear-chain molecule and the thickness of the cyclic molecules. The maximum inclusion amount is worked out experimentally in a case where, for instance, the linear-chain molecule is polyethylene glycol, and the cyclic molecules are $\alpha$-cyclodextrin molecules (Macromolecules 1993, 26, 5698-5703).

C. Crosslinking agent

The crosslinking agent (C) is not particularly limited, provided that it is a bi- or higher functional compound having reactive groups $R_3$ that are capable of reacting with the reactive groups $R_1$ of the (meth)acrylate copolymer (A) and with the reactive groups $R_2$ of the polyrotaxane (B).

Preferably, the functional groups $R_3$ of the crosslinking agent (C) are isocyanate groups, epoxy groups, aziridine groups, in particular isocyanate groups. The crosslinking agent (C) may comprise two or more types of the functional group $R_3$.

Reactions progress easily, at a controllable rate, when the reactive groups $R_1$ of the copolymer (A) are hydroxyl groups, the reactive groups $R_2$ of the polyrotaxane (B) are hydroxyl groups and the reactive groups $R_3$ of the crosslinking agent (C) are isocyanate groups. A balance between the reactivity of the reactive groups $R_1$ and the reactive groups $R_2$ can be readily struck as a result. Further, compounds having the above reactive groups are highly versatile, come in the form of a wide variety of materials that are readily available, which allows keeping costs low.

Examples of the crosslinking agent (C) include, for instance, isocyanate compounds such as xylylene diisocyanate, hexamethylene diisocyanate, tolylene diisocyanate, isophorone diisocyanate or the adduct thereof (for example, trimethylolpropane adduct); epoxy compounds such as ethylene glycol diglycidyl ether, propylene glycol diglycidyl ether, 1,6-hexanediol glycidyl ether or the adduct thereof; or aziridine compounds such as N,N-hexamethylene-1,6-bis(1-aziridine carboxyamide) or the adduct thereof. Preferred among the foregoing are isocyanate compounds.

The blending amount of the crosslinking agent (C) in the present pressure-sensitive adhesive composition is appropriately adjusted in such a manner that the equivalent ratio of the reactive groups $R_3$ of the crosslinking agent (C) with respect to the reactive groups $R_1$ of the copolymer (A), the equivalent ratio of the reactive groups $R_3$ of the crosslinking agent (C) with respect to the reactive groups $R_2$ of the polyrotaxane (B), and, preferably, the gel fraction of the pressure-sensitive adhesive layer formed from the present pressure-sensitive adhesive composition, lie within the above-described ranges. Ordinarily, the blending amount ranges from 0.1 to 10 wt%, preferably from 0.5 to 5 wt%, with respect to solids of the pressure-sensitive adhesive composition.

D. Silane coupling agent

The present pressure-sensitive adhesive composition may contain, as desired, a silane coupling agent (D) as a component other than the above components (A) to (C). Through the presence of the silane coupling agent (D), the pressure-sensitive adhesive composition can yield a pressure-sensitive adhesive layer that exhibits greater adhesiveness to inorganic materials such as glass substrates or the like.

The silane coupling agent (D) is not particularly limited, but preferably has good compatibility with the above components (A) to (C), and has optical transmissivity, in a case where the present pressure-sensitive adhesive composition is used for optical applications.

Specific examples of the silane coupling agent (D) include, for instance, silicon compounds that contain polymerizable unsaturated groups, such as vinyl trimethoxysilane, vinyl triethoxysilane, 3-methacryloyloxypropyltrimethoxysilane or the like; silicon compounds having an epoxy structure, such as 3-glycidyloxy propyltrimethoxysilane, 2-(3,4-epoxycyclohexyl)ethyltrimethoxysilane or the like; silicon compounds that contain amino groups, such as 3-aminopropyltrimethoxysilane, N-(2-aminoethyl)-3-aminopropyltrimethoxysilane, N-(2-aminoethyl)-3-aminopropylmethyldimethoxysilane or the like; as well as 3-chloropropyltrimethoxysilane or the like. The foregoing can be used singly or in combinations or two or more types.

The addition amount of the silane coupling agent (D) ranges preferably from 0.001 to 10 parts by weight, in particular from 0.005 to 5 parts by weight, with respect to 100 parts by weight of the total of the above components (A) to (C).

In a most preferred instance of the present pressure-sensitive adhesive composition, a copolymer of butyl acrylate and hydroxyethyl acrylate (reactive groups $R_1$: hydroxyl groups) is used as the (meth)acrylate copolymer (A), in the polyrotaxane (B) that is used, the cyclic molecules T are an $\alpha$-cyclodextrin having hydroxyl groups as the reactive groups $R_2$, the linear-chain molecule L is polyethylene glycol, and the blocking groups BL are adamantane groups, and the crosslinking agent (C) used is a xylylene diisocyanate / trimethylolpropane adduct (reactive groups $R_3$: isocyanate groups).

A pressure-sensitive adhesive layer can be formed through cross-linking of the above pressure-sensitive adhesive composition by heating at a temperature of about 80 to 150°C. In the pressure-sensitive adhesive layer, the (meth)acrylate copolymer (A) and the cyclic molecules T of the polyrotaxane (B) are bonded indirectly by way of the crosslinking agent (C), and the cyclic molecules T can move freely along the linear-chain molecule L of the polyrotaxane (B). The pressure-sensitive adhesive layer is imparted thereby with excellent stress relaxation properties. The pressure-sensitive adhesive layer is a durable layer that exhibits excellent optical characteristics, such as total light transmittance, while preserving stress relaxation properties.

The pressure-sensitive adhesive layer formed from the pressure-sensitive adhesive composition explained above can be preferably used for optical members. For instance, the pressure-sensitive adhesive layer is suitable for bonding a polarizing plate (polarizing film) or a retardation plate (retardation film) to a glass substrate. The pressure-sensitive adhesive layer obtained by way of the above pressure-sensitive adhesive composition has excellent optical characteristics, for instance, total light transmittance, and stress relaxation properties, and has sufficient crosslinking density. When the pressure-sensitive adhesive layer is used in optical members, therefore, there can be obtained an optical member provided with the pressure-sensitive adhesive layer, such that the optical member has excellent light leakage prevention ability and durability, as well as sufficient image display properties.

[Pressure-sensitive adhesive sheet]

The pressure-sensitive adhesive sheet of the present invention is explained next.
The pressure-sensitive adhesive sheet according to one embodiment of the present invention has a base material, and a pressure-sensitive adhesive layer that is formed, using the above-described pressure-sensitive adhesive composition, on the base material. The pressure-sensitive adhesive sheet may optionally have a release sheet formed on the face of the pressure-sensitive adhesive layer that is not in contact with the base material. Another layer may be interposed between the base material and the pressure-sensitive adhesive layer.

The above base material is not particularly limited, and there may be used base material sheets of ordinary pressure-sensitive adhesive sheets. Examples thereof, include, for instance, woven or nonwoven fabrics that use fibers such as rayon, acrylic or polyester fibers or the like; papers such as wood-free paper, glassine paper, impregnated paper, coated paper or the like; metal foils of aluminum, copper or the like; foams such as urethane foams, polyethylene foams or the like; polyester films such as polyethylene terephthalate, polybutylene terephthalate, polyethylene naphthalate or the like; plastic films such as polyurethane films, polyethylene films, polypropylene films, polyvinylchloride films, polyvinylidene chloride films, polyvinyl alcohol films, ethylene-vinyl acetate copolymer films, polystyrene films, polycarbonate films, acrylic resin films, norbornene resin films, cycloolefin resin films or the like; as well as laminates of two or more of the foregoing. The plastic films may be uniaxially or biaxially stretched.

The base material may be a release sheet or an optical member. The release sheet may also be a release sheet in which a release agent such as a fluororesin, a silicone resin or the like is applied onto a sheet-like material followed by thermal curing, UV curing or the like to form a release layer. The sheet-like material may be, for instance, paper such as glassine paper, clay coated paper, kraft paper, woodfree paper or the like, or a laminated paper of the foregoing with a polyethylene resin or the like. The sheet-like material may be a plastic film of polyethylene terephthalate, a polyolefin or the like.

Examples of the optical member include, for instance, polarizing plates (polarizing films), retardation plates (retardation films), viewing angle compensation films, luminance-enhancing films, contrast-enhancing films and the like. From among the foregoing, the pressure-sensitive adhesive layer can be suitably formed on polarizing plates (polarizing films) or retardation plates (retardation films), since the foregoing shrink readily and exhibit significant dimensional changes.

The thickness of the optical member varies depending on the type of optical member, but ranges ordinarily from 10 $\mu$m to 500 $\mu$m, preferably from 50 $\mu$m to 300 $\mu$m.

To form the pressure-sensitive adhesive layer on the base material sheet, the pressure-sensitive adhesive layer may be provided through direct coating of the base material sheet with a solution that comprises the pressure-sensitive adhesive composition (hereafter, referred to also as "pressure-sensitive adhesive solution"). Alternatively, the pressure-sensitive adhesive solution may be coated onto a release sheet, to provide a pressure-sensitive adhesive layer thereon, after which the whole is affixed to the base material sheet, to transfer the pressure-sensitive adhesive layer to the base material sheet.

Examples of the solvent used for diluting the pressure-sensitive adhesive composition to yield a pressure-sensitive adhesive solution include, for instance, aliphatic hydrocarbons such as hexane, heptane, cyclohexane or the like; aromatic hydrocarbons such as toluene, xylene or the like; halogenated hydrocarbons such as methylene chloride, ethylene chloride or the like; alcohols such as methanol, ethanol, propanol, butanol, 1-methoxy-2-propanol or the like; ketones such as acetone, methyl ethyl ketone, 2-pentanone, isophorone, cyclohexanone or the like; esters such as ethyl acetate, butyl acetate or the like; or cellosolve solvents such as ethyl cellosolve.

The concentration and viscosity of the pressure-sensitive adhesive solution thus prepared is not particularly limited, and may be appropriately selected depending on the circumstances, so long as application of the pressure-sensitive adhesive solution is not precluded by the viscosity and concentration. Various additives, for instance antioxidants, ultraviolet absorbers, infrared absorbers, antistatic agents, spreading agents and the like may also be added to the pressure-sensitive adhesive solution, as the case may require. Adding the solvent and so forth is not a prerequisite for obtaining the pressure-sensitive adhesive solution; thus, addition of the solvent may be omitted, so long as application of the pressure-sensitive adhesive solution is not precluded by the viscosity and so forth. In this case, the pressure-sensitive adhesive composition as-is constitutes the pressure-sensitive adhesive solution.

The method for applying the pressure-sensitive adhesive solution can be a conventionally known method, such as roll coating, knife coating, bar coating, gravure coating, die coating, spray coating or the like. The above pressure-sensitive adhesive layer can be formed by applying a pressure-sensitive adhesive solution in accordance with the above-described methods, followed by solvent removal through, for instance, hot-air drying or the like, and reaction and cross-linking of the pressure-sensitive adhesive composition through heating or the like. The thickness of the pressure-sensitive adhesive layer is not particularly limited and is appropriately selected in accordance with the intended use. Ordinarily, the thickness ranges from 5 to 100 $\mu$m, preferably from 10 to 60 $\mu$m.

In the present pressure-sensitive adhesive sheet, the pressure-sensitive adhesive layer can absorb and/or relax the stress resulting from dimensional changes of the base material of the pressure-sensitive adhesive sheet or of the adherend to which the pressure-sensitive adhesive sheet is affixed, even if such dimensional change is substantial. The pressure-sensitive adhesive sheet becomes thus unlikelier to peel off the adherend, even over long periods of time.

In the optical member in which the above pressure-sensitive adhesive layer is formed, a release sheet can be overlaid, as the case may require, on the face of the pressure-sensitive adhesive layer at which the optical member is not stacked. The optical member having the pressure-sensitive adhesive layer formed thereon is bonded as-is, if there is no release sheet, or after removing of a release sheet, if one is present, to a glass substrate, an optical resin substrate or the like, to make up, for instance, a liquid crystal panel, a liquid crystal display, a flexible display, an organic EL display, a display for electronic paper or the like. The pressure-sensitive adhesive layer obtained by way of the above pressure-sensitive adhesive composition has excellent optical characteristics, for instance, total light transmittance, and stress relaxation properties, and has sufficient crosslinking density. The display has as a result excellent light leakage prevention ability and durability, as well as excellent image display properties.

The haze value of the pressure-sensitive adhesive layer is preferably not greater than 30%, in particular not greater than 25%, and ranges more preferably from 0 to 6%, in terms of achieving high-resolution display. A haze value in excess of 30% gives rise to cloudiness in the pressure-sensitive adhesive layer, and may impair display visibility. The total light transmittance of the pressure-sensitive adhesive layer is preferably not lower than 70%, in particular not lower than 85%, in terms of achieving good visibility. Thanks to the above properties, the pressure-sensitive adhesive layer is suitable as an optical member for use in, for instance, liquid crystal panels, liquid crystal displays, flexible displays, organic EL displays, electronic paper or the like. The present embodiment allows satisfying the above property values through the use of the pressure-sensitive adhesive layer formed from the above-described pressure-sensitive adhesive composition.

Ordinarily, the dimensional change in a sheet-like optical member such as a polarizing plate (polarizing film), retardation plate (retardation film) or the like is substantial. However, the pressure-sensitive adhesive sheet of the present invention having an optical member can absorb and/or relax, by way of the pressure-sensitive adhesive layer, the stress resulting from dimensional changes of the sheet-like optical member. The pressure-sensitive adhesive sheet becomes thus unlikelier to peel off the adherend, even over long periods of time.

Examples

The present invention will be explained below in further detail on the basis of examples and so forth. However, the scope of the present invention is not limited to the examples and so forth.

[Example 1]

As the polyrotaxane (B), there was prepared a modified polyrotaxane according to the method set forth in Soft Mater., 2008, 4, 245-249, such that the modified polyrotaxane comprised:

linear-chain molecule L: polyethylene glycol (weight-average molecular weight 35,000);
cyclic molecules T: $\varepsilon$-caprolactone graft-polymerized to $\alpha$-cyclodextrin, after introduction of hydroxypropyl groups (hydroxypropyl degree of substitution: 48%, $\varepsilon$-caprolactone polymerization charge amount [$\varepsilon$-caprolactone]/[hydroxyl group]=3.9, inclusion amount of cyclic molecules T: 25%);
blocking groups BL: adamantane groups.
The hydroxyl group amount of the obtained polyrotaxane (B) was 1.4 mmol/g.

Herein, 100 parts by weight of an acrylate copolymer having a weight-average molecular weight of 1,800,000 and comprising 98.5 wt% of butyl acrylate units and 1.5 wt% of 2-hydroxyethyl acrylate units, as the (meth)acrylate copolymer (A); 6 parts by weight of the above polyrotaxane (B); 4 parts by weight of a xylylene diisocyanate / trimethylolpropane adduct (by Soken Chemical & Engineering co., Ltd., TD-75, trifunctional, molecular weight 698, solids 75 wt%) as the crosslinking agent (C); and 0.2 parts by weight of 3-glycidyloxypropyltrimethoxysilane (by Shin Etsu Chemical co., Ltd., KBM403) as the silane coupling agent (D) were mixed to yield a pressure-sensitive adhesive composition that was then diluted in methyl ethyl ketone to yield a solution having a solids concentration of 12%. This solution was a pressure-sensitive adhesive solution.

In the above pressure-sensitive adhesive composition, the equivalent ratio of isocyanate groups of the crosslinking agent (C) with respect to the hydroxyl groups in the copolymer (A) was 1, and the equivalent ratio of isocyanate groups of the crosslinking agent (C) with respect to the hydroxyl groups in the polyrotaxane (B) was 1.5. The hydroxyl group amount of the polyrotaxane (B) is a value measured according to JIS K 0070.

The above pressure-sensitive adhesive solution was applied using a knife coater onto the release-treated surface of a polyethylene terephthalate release sheet (by LINTEC Corporation, SP-PET3811) obtained by subjecting one surface to a release treatment with a silicone-based release agent, and then drying was carried out for 1 minute at 90°C, to form a pressure-sensitive adhesive layer with a thickness of 25 $\mu$m.

A polarizing plate (a three-layer laminate, 200 $\mu$m thick, of triacetyl cellulose film /poly vinyl alcohol film /triacetyl cellulose film (having a viewing angle-widening function)) was stacked on the above pressure-sensitive adhesive layer, to yield a pressure-sensitive adhesive sheet in which a pressure-sensitive adhesive layer was formed on the polarizing plate.

[Example 2]

A pressure-sensitive adhesive sheet in which a pressure-sensitive adhesive layer was formed on a polarizing plate was produced in the same way as in Example 1, but herein the blending amounts of the crosslinking agent (C) and the polyrotaxane (B) were adjusted in such a manner that the equivalent ratio of the crosslinking agent (C) with respect to the (meth)acrylate copolymer (A) was 0.5.

[Example 3]

A pressure-sensitive adhesive sheet in which a pressure-sensitive adhesive layer was formed on a polarizing plate was produced in the same way as in Example 1, but herein the blending amounts of the crosslinking agent (C) and the polyrotaxane (B) were adjusted in such a manner that the equivalent ratio of the crosslinking agent (C) with respect to the copolymer (A) was 0.2.

[Example 4]

A pressure-sensitive adhesive sheet in which a pressure-sensitive adhesive layer was formed on a polarizing plate was produced in the same way as in Example 1, but herein the blending amounts of the crosslinking agent (C) and the polyrotaxane (B) were adjusted in such a manner that the equivalent ratio of the crosslinking agent (C) with respect to the copolymer (A) was 0.1.

[Example 5]

A pressure-sensitive adhesive sheet in which a pressure-sensitive adhesive layer was formed on a polarizing plate was produced in the same way as in Example 1, but herein the blending amounts of the crosslinking agent (C) and the polyrotaxane (B) were adjusted in such a manner that the equivalent ratio of the crosslinking agent (C) with respect to the copolymer (A) was 0.01.

[Example 6]

A pressure-sensitive adhesive sheet in which a pressure-sensitive adhesive layer was formed on a polarizing plate was produced in the same way as in Example 1, but herein the blending amounts of the crosslinking agent (C) and the (meth)acrylate copolymer (A) were adjusted in such a manner that the equivalent ratio of the crosslinking agent (C) with respect to the polyrotaxane (B) was 2.

[Example 7]

A pressure-sensitive adhesive sheet in which a pressure-sensitive adhesive layer was formed on a polarizing plate was produced in the same way as in Example 1, but herein the blending amounts of the crosslinking agent (C) and the (meth)acrylate copolymer (A) were adjusted in such a manner that the equivalent ratio of the crosslinking agent (C) with respect to the polyrotaxane (B) was 4.

[Comparative example 1]

Herein, 100 parts by weight of an acrylate copolymer having a weight-average molecular weight of 1,800,000 and comprising 98.5 wt% of butyl acrylate units and 1.5 wt% of 2-hydroxyethyl acrylate units, as the (meth)acrylate copolymer (A); 3 parts by weight of a xylylene diisocyanate / trimethylolpropane adduct (by Soken Chemical & Engineering co., Ltd., TD-75) as the crosslinking agent (C); and 0.2 parts by weight of 3-glycidyloxypropyltrimethoxysilane (by Shin Etsu Chemical co., Ltd., KBM403) as the silane coupling agent (D) were mixed to yield a pressure-sensitive adhesive composition that was then diluted in methyl ethyl ketone to yield a solution having a solids concentration of 12%. This solution was a pressure-sensitive adhesive solution.

In the above pressure-sensitive adhesive composition, the equivalent ratio of isocyanate groups of the crosslinking agent (C) with respect to the hydroxyl groups in the copolymer (A) was 1.

A pressure-sensitive adhesive sheet in which a pressure-sensitive adhesive layer was formed on a polarizing plate was produced in the same way as in Example 1, but using herein the obtained pressure-sensitive adhesive solution.

[Comparative example 2]

As the polyrotaxane (B), an acetylated polyrotaxane was prepared, in a similar way as in Example 6 of JP 2007-224133 A, by the process of treating, with acetic anhydride, the hydroxyl groups of a cyclodextrin of a polyrotaxane comprising:

linear-chain molecule L: polyethylene glycol (weight-average molecular weight 35,000);
cyclic molecules T: $\alpha$-cyclodextrin;
blocking groups BL: adamantane groups;

in a dimethylacetamide/lithium chloride solvent, in the presence of dimethylaminopyridine (catalyst). The hydroxyl group amount of the obtained polyrotaxane (B) was 2.1 mmol/g.

Herein, 100 parts by weight of an acrylate copolymer having a weight-average molecular weight of 800,000 and comprising 80 wt% of butyl acrylate units and 20 wt% of 2-hydroxyethyl acrylate units, as the (meth)acrylate copolymer (A); 5 parts by weight of the above polyrotaxane (B); and 2.5 parts by weight of a xylylene diisocyanate / trimethylolpropane adduct (by Soken Chemical & Engineering co., Ltd., TD-75) as the crosslinking agent (C) were mixed to yield a pressure-sensitive adhesive composition that was then diluted in methyl ethyl ketone to yield a solution having a solids concentration of 12%. This solution was a pressure-sensitive adhesive solution.

In the above pressure-sensitive adhesive composition, the equivalent ratio of isocyanate groups of the crosslinking agent (C) with respect to the hydroxyl groups in the (meth)acrylate copolymer (A) was 0.05, and the equivalent ratio of isocyanate groups of the crosslinking agent (C) with respect to the polyrotaxane (B) was 0.8.

A pressure-sensitive adhesive sheet in which a pressure-sensitive adhesive layer was formed on a polarizing plate was produced in the same way as in Example 1, but using herein the obtained pressure-sensitive adhesive solution.

[Test examples]

(1) Measurement of the Gel Fraction

The pressure-sensitive adhesive solutions of the examples and comparative examples were applied, such that the thickness after drying would be 20 $\mu$m, onto the release-treated surface of a polyethylene terephthalate release sheet (by LINTEC Corporation, SP-PET3811) obtained by subjecting one surface to a release treatment with a silicone-based release agent, and heating was carried out for 1 minute at 100˚C, to form pressure-sensitive adhesive layers. The pressure-sensitive adhesive layers were affixed onto the release-treated surface of another polyethylene terephthalate release sheet (by LINTEC Corporation, SP-PET3801), to obtain pressure-sensitive adhesive sheets.

The pressure-sensitive adhesive sheets were left to stand for one week in an atmosphere at 23˚C and 50% humidity, after which about 0.1 g of the adhesive was sampled from the pressure-sensitive adhesive sheets and was wrapped in a Tetron mesh (#400). The non-gel fraction of the adhesive was extracted under reflux, with ethyl acetate as a solvent, in a Soxhlet extractor (lipid extractor, by Tokyo Glass Kikai Co.). The gel fraction was calculated based on the ratio vis-à-vis the initial weight. The results are given in Table 1.

(2) Durability test

pressure-sensitive adhesive sheets obtained in the examples and comparative examples, and in which a pressure-sensitive adhesive layer was formed on a polarizing plate, were cut to a size of 233 mm by 309 mm using a cutting machine (Super Cutter PN 1-600, by Ogino Seiki), then the resulting samples were affixed to one surface of alkali-free glass (1737, by Corning, thickness 0.7 mm). Thereafter the samples were pressurized in an autoclave (by Kurihara Manufactory Inc.) under 0.5 MPa, at 50˚C, for 20 minutes, to yield optical laminates.

The obtained optical laminates were placed in environments under the various durability conditions below.

<Durability conditions>

1) 60˚C - relative humidity 90%
2) 80˚C - dry
3) 200 cycles of heat shock test for 30 minutes each, in an environmental conditions from -20˚C to 60˚C

After 200 hours, the optical laminates were observed using a lupe, at 10 magnifications, to evaluate the durability on the basis of the criteria below. The results are given in Table 1.

O: no defect observed at a distance of 0.6 mm or more from any of the peripheral edges on all four sides
x: appearance anomaly (defect) in the adhesive having a size of 0.1 mm or larger such as peeling, blisters, streaks and the like, observed at a distance of 0.6 mm or more from the peripheral edge of at least one side from among the four sides

(3) Light leakage test

pressure-sensitive adhesive sheets as obtained in the examples and comparative examples, in which a pressure-sensitive adhesive layer was formed on a polarizing plate, were cut to a size of 233 mm by 309 mm using a cutting machine (Super Cutter PN 1-600, by Ogino Seiki), then the resulting samples were affixed to both sides of alkali-free glass (1737, by Corning, thickness 0.7 mm). Thereafter the samples were pressurized in an autoclave (by Kurihara Manufactory Inc.) under 0.5 MPa, at 50˚C, for 20 minutes, to yield optical laminates. The above-described affixing was performed in such a manner that the polarization axis of the polarizing plates on the front and rear of the alkali-free glass were in a crossed Nicol state.

The obtained optical laminate was left to stand at 80˚C for 200 hours, and thereafter for 2 hours in an environment at 23˚C and 50% relative humidity. Light leakage was evaluated thereupon in accordance with the below-described method.

The lightness of respective regions (A region, B region, C region, D region, E region), as illustrated in Fig. 2, of each optical laminate, was measured using an instrument MCPD-2000, by Otsuka Electronics. The lightness difference $\Delta L^*$ was worked out according to formula $\Delta L^*=[(b+c+d+e)/4]-a$ (wherein a, b, c, d and e denote the lightness measured at each measurement point defined beforehand for the A region, B region, C region, D region and E region (one site at the center of each region)). The lightness difference $\Delta L^*$ was taken as the light leakage. A smaller value of $\Delta L^*$ denotes smaller light leakage.

(4) Measurement of total light transmittance and haze value

The pressure-sensitive adhesive solutions of the examples and comparative examples were applied, such that the thickness after drying would be 25 $\mu$m, onto the release-treated surface of a polyethylene terephthalate release sheet (by LINTEC Corporation, SP-PET3811) obtained by subjecting one surface to a release treatment with a silicone-based release agent, and heating was carried out for 1 minute at 100˚C, to form pressure-sensitive adhesive layers. The pressure-sensitive adhesive layers were affixed to an easy-adhesion treated face of an easy-adhesion polyethylene terephthalate film (PET100A4300, by TOYOBO CO., LTD), to yield pressure-sensitive adhesive sheets.

The release sheets of the obtained pressure-sensitive adhesive sheets were stripped off, and diffusive transmittance (Td%) and total light transmittance (Tt%) were measured according to JIS K7105 using an integrating sphere-type light transmittance measurement device (by Nippon Denshoku Industries, NDH-2000). The haze value was calculated according to the formula below. The results are given in Table 1.

$$\texttt{Haze value = Td/Tt} \times \texttt{100}$$

[Table 1]

|  | Durability | | | $\Delta L^*$ | Gel fraction (%) | Tt (%) | Haze value |
|---|---|---|---|---|---|---|---|
|  | 60˚C 90% RH | 80˚C dry | -20˚C ⇔60˚C | | | | |
| Example 1 | ○ | ○ | ○ | 2.2 | 77 | 93 | 25.0 |
| Example 2 | ○ | ○ | ○ | 1.9 | 72 | 91 | 11.1 |
| Example 3 | ○ | ○ | ○ | 1.6 | 70 | 90 | 5.9 |
| Example 4 | ○ | ○ | ○ | 1.0 | 63 | 90 | 4.6 |
| Example 5 | ○ | ○ | ○ | 0.9 | 57 | 90 | 2.4 |
| Example 6 | ○ | ○ | ○ | 2.2 | 82 | 93 | 25.4 |
| Example 7 | ○ | ○ | ○ | 2.6 | 89 | 92 | 25.1 |
| Comparative example 1 | × | × | × | 6.2 | 98 | 90 | 4.0 |
| Comparative example 2 | × | × | × | 3.4 | 92 | 88 | 26.0 |

As Table 1 shows, the pressure-sensitive adhesive compositions of the examples, as well as the pressure-sensitive adhesive sheets formed therefrom, exhibited excellent durability, light leakage properties and optical characteristics.

Comparative example 2, which is an example from among the examples described in JP 2007-224133 A that is closest in composition to the present invention, was included for the purpose of comparison vis-à-vis the present invention. A comparison between all the examples and Comparative example 2 reveals that the pressure-sensitive adhesive composition of the present invention is superior, for optical applications, to the pressure-sensitive adhesive composition disclosed in JP 2007-224133 A.

INDUSTRIAL APPLICABILITY

The pressure-sensitive adhesive composition of the present invention is suitable for bonding of an optical member, for instance a polarizing plate or a retardation plate. The pressure-sensitive adhesive sheet of the present invention is suitable as a polarizing plate or retardation plate having adhesiveness.

**Claims**

1. A pressure-sensitive adhesive composition, comprising:

   a (meth)acrylate copolymer (A) obtained by copolymerizing a (meth)acrylate and a reactive group-containing monomer, such that a ratio of the reactive group-containing monomer in the copolymer ranges from 0.01 to 15 wt%;
   a polyrotaxane (B) having at least two cyclic molecules and a linear-chain molecule passing through opening portions of the cyclic molecules wherein the cyclic molecules have each one or more reactive groups and the linear-chain molecule has blocking groups at both ends thereof; and
   a crosslinking agent (C) having a reactive group capable of reacting with the reactive group of the (meth)acrylate copolymer (A) and with the reactive group of the polyrotaxane (B),
   wherein an equivalent ratio of the reactive group of the crosslinking agent (C) with respect to the reactive group of the (meth)acrylate copolymer (A) ranges from 0.001 to 2, and
   an equivalent ratio of the reactive group of the crosslinking agent (C) with respect to the reactive group of the polyrotaxane (B) ranges from 0.1 to 5.

2. The pressure-sensitive adhesive composition according to claim 1, wherein a gel fraction after crosslinking of the pressure-sensitive adhesive composition ranges from 20 to 90%.

3. The pressure-sensitive adhesive composition according to claim 1 or 2, wherein the reactive group of the (meth) acrylate copolymer (A) is a hydroxyl group, the reactive group of the polyrotaxane (B) is a hydroxyl group and the reactive group of the crosslinking agent (C) is an isocyanate group.

4. A pressure-sensitive adhesive sheet, comprising:

   a base material; and
   a pressure-sensitive adhesive layer formed using the pressure-sensitive adhesive composition according to any one of claims 1 to 3.

5. The pressure-sensitive adhesive sheet according to claim 4, wherein the base material comprises a release sheet.

6. The pressure-sensitive adhesive sheet according to claim 4, wherein the base material comprises an optical member.

7. The pressure-sensitive adhesive sheet according to claim 4, wherein the base material comprises a polarizing plate or a retardation plate.

Figure 1

Figure 2

## INTERNATIONAL SEARCH REPORT

| International application No. |
|---|
| PCT/JP2009/070314 |

**A. CLASSIFICATION OF SUBJECT MATTER**
*C09J133/06*(2006.01)i, *C09J7/02*(2006.01)i, *C09J11/06*(2006.01)i, *C09J175/04*
(2006.01)i, *C09J201/00*(2006.01)i, *C09J201/06*(2006.01)i

According to International Patent Classification (IPC) or to both national classification and IPC

**B. FIELDS SEARCHED**

Minimum documentation searched (classification system followed by classification symbols)
C09J1/00-C09J201/10

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-224133 A  (Lintec Corp.),<br>06 September 2007 (06.09.2007),<br>claims 2 to 4, 15, 16; paragraphs [0005],<br>[0008], [0043], [0047], [0052], [0059]<br>& US 2009/0062467 A1     & EP 1995290 A1<br>& WO 2007/097365 A1     & KR 10-2008-0100825 A<br>& CN 101405361 A | 1-7 |
| A | JP 2008-63350 A  (Nitto Denko Corp.),<br>21 March 2008 (21.03.2008),<br>claim 1; paragraph [0003]<br>(Family: none) | 5-7 |

☐  Further documents are listed in the continuation of Box C.        ☐  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 19 February, 2010 (19.02.10) | 02 March, 2010 (02.03.10) |

| Name and mailing address of the ISA/<br>Japanese Patent Office | Authorized officer |
|---|---|
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006235568 A
- JP 5045517 A
- JP 9137143 A

- JP 2005194366 A
- JP 2007224133 A
- JP 2005154675 A

**Non-patent literature cited in the description**

- *Macromolecules,* 1993, vol. 26, 5698-5703

- *Soft Mater.,* 2008, vol. 4, 245-249